# EUROPÄISCHE PATENTSCHRIFT

(11) **EP 1 032 521 B1**
(45) Veröffentlichungstag und Bekanntmachung des Hinweises auf die Patenterteilung: **25.09.2002**
(21) Anmeldenummer: 98965572.5
(22) Anmeldetag: 17.11.1998
(51) Int. Cl.: B62B 5/02, A61G 5/06, B62D 55/075

(54) **SICHERHEITSVORRICHTUNG FÜR TREPPENSTEIGVORRICHTUNGEN**
SAFETY DEVICE FOR STAIRWAY ELEVATOR SYSTEMS
DISPOSITIF DE SECURITE POUR SYSTEME MONTE-ESCALIER

(30) Priorität: 26.11.1997 DE 29720939 U
(43) Veröffentlichungstag der Anmeldung: 06.09.2000
(73) Patentinhaber: Otto Bock HealthCare GmbH, 37115 Duderstadt (DE)
(72) Erfinder: CARSTENS, Bernt, D-67434 Neustadt (DE)
(74) Vertreter: Rehmann, Klaus-Thorsten, Dipl.-Ing.
(86) Internationale Anmeldenummer: DE9803377
(87) Internationale Veröffentlichungsnummer: WO99028177

(56) Entgegenhaltungen:
- WO-A-90/00997
- FR-A- 2 574 740
- US-A- 3 346 268
- US-A- 4 061 199
- US-A- 4 432 425

## Beschreibung

Die Erfindung betrifft Sicherheitsvorrichtungen, zu verwenden mit Treppensteigvorrichtungen für den Transport von Geräten und Gütern, insbesondere von Rollstühlen mit gehunfähigen Personen, gemäß dem Oberbegriff des Anspruchs 1.

Für den Transport von Rollstühlen mit gehunfähigen Personen auf Treppen sind zwei Konstruktionsprinzipien weit verbreitet. Das eine Konstruktionsprinzip verwendet Raupenfahrwerke. Die Raupen sind so lang, daß wenigstens drei Treppenstufen gleichzeitig erfaßt werden. Dadurch ist ein unbeaufsichtigtes Abkippen von Rollstuhl und Person nicht möglich, so daß Stürze mit resultierenden Verletzungen oder gar Todesfällen ausscheiden. Aufgrund der Länge und Breite der Raupenfahrwerke haben diese Treppensteiger jedoch Probleme bei schmalen und gewundenen Treppen.

Das andere Konstruktionsprinzip verwendet eine Mehrzahl von Rädern, die sich nicht nur um ihre eigene Achse, sondern gleichzeitig um eine allen Rädern gemeinsame Achse drehen. Man vergleiche DE-C 37 13 564 oder DE-C 32 26 294. An diesen Geräten ist einerseits vorteilhaft, daß nur gummibereifte Räder mit der Treppe und insbesondere der Treppenkante in Berührung kommen, so daß Beschädigungen größtenteils ausgeschlossen sind; andererseits ist sehr gefährlich, daß die Räder nur mit beschränkter Tiefe in die Stufen eingreifen können. Die Bedienung dieser Vorrichtungen bedarf daher besonderer Vorsicht und Umsicht, und zwar nicht zuletzt deshalb, weil die Last aus einem Menschen besteht. Tatsächlich sind Treppen jedoch sehr vielgestaltig, sie variieren zwischen relativ flachen, völlig gerade verlaufenden Treppen bis hin zu engen und steilen Wendeltreppen. Das Besteigen der Treppen mit den auf dem Vielräder-Prinzip beruhenden Treppensteigern ist nicht ungefährlich, weil das Gerät kippen kann. Treppensteiger, Rollstuhl und Person müssen daher von einer kräftigen Bedienungsperson gehalten werden. Trotzdem kommt es leider immer wieder zu Unfällen.

Der vorliegenden Erfindung liegt die Aufgabe zugrunde, Sicherheitsvorrichtungen zum Anbauen an kippgefährdete Treppensteigvorrichtungen anzugeben.

Diese Aufgabe wird gelöst durch Sicherheitsvorrichtungen mit den Merkmalen des Anspruchs 1.

Diese Sicherheitsvorrichtungen, zu denen es die in den Unteransprüchen definierten Ausgestaltungen und Weiterbildungen gibt, besitzen eine Vielzahl von Vorteilen.

Ein erster, für die Betroffenen sehr wesentlicher Vorteil ist, daß sie sich bei allen bekannten und noch zu entwickelnden Treppensteigvorrichtungen nachrüsten lassen, so daß Stürze in Zukunft nicht mehr möglich sind.

Ein weiterer Vorteil ist, daß der Stützarm relativ kurz gebaut werden kann, da er nur ein bis zwei Treppenstufen überbrücken muß. Da er außerdem sehr schmal ist, bereiten auch eng gewundene Treppen keine Probleme.

Als dritter Vorteil ist anzuführen, daß die erfindungsgemäßen Stützarme die Handhabung der Treppensteigvorrichtung selbst in keiner Weise verändern, da sie im Normalfall gegenüber der Treppensteigvorrichtung völlig frei beweglich sind. Erst wenn die Treppensteigvorrichtung eine Lage einnimmt, daß Kippgefahr besteht, wird das Drehgelenk des Stützarmes blockiert, und zwar so lange, bis die Bedienungsperson die Treppensteigvorrichtung wieder in eine ungefährliche Lage gebracht hat.

Gemäß einer ersten, bevorzugten Ausgestaltung der Erfindung bewirken im unteren Endbereich des Stützarms angebrachte Vorrichtungen, vorzugsweise aus einem elastischen und daher treppenschonenden Material, einen weitgehend senkrecht auf die Trittfläche der nächst- oder zweitnächst unteren Stufe auftreffenden Abstützvorgang. Es hat sich herausgestellt, daß die Abstützung auf der Trittfläche der Stufen weitaus sicherer und zuverlässiger ist als eine Abstützung an der Vorderkante der Stufen. Der beim Blockieren des Drehgelenks entstehende Ruck wird optimal abgefangen.

Vorzugsweise ist am freien Ende des Stützarms eine Anzahl von Stützfüßen angebracht oder angeformt, von denen sich jeweils einer im Gefahrenfall wie schon erwähnt auf der Trittfläche der nächstoder zweitnächst unteren Treppenstufe abstützt. Die Anordnung von mehreren Stützfüßen erlaubt eine optimale Anpassung an unterschiedliche Höhen und Tiefen der Treppenstufen.

Gemäß einer Weiterbildung sind die Stützfüße in zwei Einheiten aufgeteilt. Die eine, vorzugsweise die obere Einheit, ist am Stützarm gegen eine Feder verschieb- und schwenkbar gelagert und mit einer Sperrvorrichtung ausgerüstet, die die bewegliche Einheit blockiert, sobald die Aufstützkraft auf der Treppe die Kraft der Feder überwindet, was immer dann der Fall ist, wenn der Treppensteiger über die Treppe zu stürzen droht und die Brems- und Sperrvorrichtung das Drehgelenk des Stützarms blockiert hat.

Insbesondere um die Treppenkanten zu schonen, empfiehlt es sich, gemäß einer vorteilhaften Weiterbildung dieser Erfindung parallel zum Stützarm eine Gleitkufe zu montieren, wobei eine Zugfeder den Stützarm so in die Gleitkufe zieht, daß im Normalfall nur die Stirnkante der Gleitkufe auf den Treppenstufenkanten aufliegt. Es versteht sich, daß die Federkraft so dimensioniert sein muß, daß die Stützfüße des Stützarms im Gefahrenfall verzögerungsfrei ihre Stützfunktion entfalten können.

Vorzugsweise besitzt die Gleitkufe einen U-förmigen Querschnitt. Dadurch sind im Normalfall der Stützarm und seine Stützfüße allseitig abgedeckt.

Um die Kanten der Treppenstufen zu schonen, kann die Stirnkante der Gleitkufe mit einem gut gleitfähigen Material belegt sein. Eine noch bessere Schonung ergibt sich, wenn vor der Stirnkante der Gleitkufe ein endlos umlaufendes Band montiert ist.

Wie schon erwähnt, muß das Drehgelenk des Stützarms möglichst verzögerungsfrei blockiert werden, sobald der Treppensteiger sich gefährlich nach vorne neigt und die Treppe hinunterzustürzen droht. Das bedeutet, daß die Winkelstellung des Treppensteigers stets gemessen und überwacht werden muß.

Hierzu dient vorzugsweise ein Krängungssensor in Form eines Pendels, montiert am Treppensteiger oder an der Montagevorrichtung.

Für die Vorrichtung zum Blockieren des Drehgelenks sind mehrere Varianten möglich.

Gemäß einer ersten Variante besteht die Brems- und Sperrvorrichtung aus einem Klinkenrad und einer Klinke. Dabei liegt das Zentrum des Klinkenrades bevorzugt im Zentrum der Drehachse. Die Klinke ist als Pendel ausgebildet und an der Montagevorrichtung um eine eigene Achse pendelnd montiert. Sobald der Treppensteiger nach vorne kippt, fällt die Klinke in die Verzahnung des Klinkenrades ein und blockiert das Drehgelenk. Eine solche Sperrvorrichtung ist mechanisch einfach und funktionssicher.

Gemäß einer Variante hierzu ist das Zentrum des Klinkenrades gegenüber der Drehachse verschoben. Die Klinke ist an der Montagevorrichtung um eine eigene Achse schwenkbar gelagert und wird durch eine Feder zwischen Klinke und Montagevorrichtung definiert in ihrer Ruheposition gehalten. Diese Konstruktionsvariante hat den Vorteil, daß die Klinke sich nicht aufgrund der Schwerkraft einstellen muß, was eine größere Freiheit bei der Konstruktion erlaubt. Die Funktion entspricht im übrigen der der ersten Variante.

Bei beiden Varianten besteht die Klinke vorteilhafterweise aus einem massearmen Teil, der aufgrund seiner Massearmut schnell in das Klinkenrad einfällt, und einem massereichen Teil, der für die Beibehaltung der senkrechten Richtung verantwortlich ist. Beide Teile werden durch eine Feder zusammengezogen, die jedoch so schwach ist, daß das schnelle Einfallen der Klinke in das Klinkenrad nicht verzögert wird.

Bei beiden Ausführungsformen ist die Winkelposition des Klinkenrades zum Stützarm vorteilhafterweise einstellbar. Dadurch können Verschiebungen des Gesamtschwerpunktes, hervorgerufen durch unterschiedliche Maße und Gewichte von Treppensteiger, Rollstuhl und gehunfähiger Person, ausgeglichen werden.

Eine alternative Ausführungsform für die Brems- und Sperrvorrichtung ist ein blockierbares Zugglied endlicher Länge zwischen Stützarm und Montagevorrichtung bzw. Treppensteiger.

Alternativ dazu kann auch eine Backenbremse eingesetzt werden.

Bevorzugt ist eine Federband-Bandbremse, da diese sehr schnell und sicher arbeitet und die nötige Freilauf-Funktion besitzt.

Alternativ kann auch eine Elektrokupplung verwendet werden.

Gemäß einer weiteren Variante ist die Brems- und Sperrvorrichtung als blockierbare Zylinder-Kolben-Einheit ausgeführt. Bevorzugt handelt es sich dabei um Zylinder-Kolben-Einheiten mit einem internen Fluid-Umlauf und einem vom Krängungssensor angesteuerten Sperrventil im Fluidumlauf. Als Fluid kommen sowohl Hydrauliköle als auch Gase in Betracht.

Gemäß einer vorteilhaften Weiterbildung der Erfindung befindet sich zwischen Stützarm und Montageblech eine Stützfeder. Diese Stützfeder muß so ausgelegt sein, daß sie kraftlos ist, wenn die Treppensteigvorrichtung die korrekt zur Treppe hin geneigte Position hat. Neigt sich der Treppensteiger nach hinten, zur Treppe hin, so drückt die Feder ihn in die Normalposition zurück. Will der Treppensteiger gefährlich nach vorne kippen, so zieht die Feder ihn wieder in die korrekte Position zurück. In beiden Fällen entlastet somit die Stützfeder die Dedienungsperson kräftemäßig.

Falls der Stützarm mit einer Gleitkufe ausgerüstet ist, sind die Federn zwischen Stützarm und Gleitkufe sowie zwischen Stützarm und Montagevorrichtung kräftemäßig so aufeinander abzustimmen, daß bei gefährlicher Neigung der Treppensteiggeräte treppabwärts die Gleitkufe zurückweicht und damit die Stützfüße zum Aufsetzen auf die Stufe freigibt.

Um die Bedienungsperson noch weiter zu entlasten und um auch schwere Lasten schnell und vor allem sicher über die Treppen transportieren zu können, ist parallel zur Brems- und sperrvorrichtung ein Antrieb vorgesehen. Dies kann ein Elektromotor mit Gewinde sein, ein Hydraulikzylinder oder dergleichen. In jedem Fall wird der Antrieb angesteuert in Abhängigkeit von der Soll-Ist-Differenz der Lage des Stützarms relativ zum Treppensteiger und/oder der Andruckkraft des Stützarms auf der Treppe.

Zum Aufstützen des Stützarms auf der Trittfläche der Treppenstufen sind nicht nur Stützfüße geeignet, sondern beispielsweise ein endloses Raupenband. Geeignet sind auch Stützräder, die an einem zwei- oder dreiarmigen Drehkreuz befestigt sind. Konstruktionen aus Drehkreuz und Stützrädern sind bei Treppensteigvorrichtungen bereits eingesetzt. Schließlich besteht sogar die Möglichkeit, die Sicherheitsvorrichtung mit einem motorischen Antrieb auszurüsten, der den Hubtrieb des Treppensteigers aktiv unterstützt und am Stützarm montiert wird.

Gemäß einer ersten Variante hierzu können das Raupenband bzw. das Drehkreuz mit den Stützrädern durch einen Motor angetrieben werden. Gemäß einer zweiten Variante kann am Stützarm auch ein paternosterartiger Hubtrieb vorgesehen sein.

Vorzugsweise sind die Hubtriebe am Treppensteiger und am Stützarm miteinander synchronisiert. In diesem Fall wird der Rollstuhl mit nur minimalsten Schwankungen treppauf und treppab transportiert. Die Bedienungsperson hat im wesentlichen nur noch Führungsfunktion, keine Haltefunktion mehr. Solche Treppensteiger können daher auch von weniger kräftigen Personen bedient werden. Gleichwohl bleibt auch in diesen Fällen die Brems- und Sperrvorrichtung aktiv und verhindert im Gefahrenfall das Abkippen des Treppensteigers mit Rollstuhl und gehunfähiger Person über die Treppe.

Anhand der Zeichnung soll die Erfindung in Form eines Ausführungsbeispiels näher erläutert werden. Es zeigen:
- Fig. 1: in schematischer Darstellung die Seitenansicht eines Treppensteigers mit Rollstuhl auf einer Treppe,
- Fig. 2: eine auszugsweise Darstellung des Treppensteigers der Fig. 1 mit einer ersten Sicherheitsvorrichtung,
- Fig. 3: ausschnittsweise den Treppensteiger der Fig. 1 und 2 mit einer abgewandelten Sicherheitsvorrichtung,
- Fig. 4: auszugsweise den Treppensteiger der Fig. 1 mit einer dritten Sicherheitseinrichtung,
- Fig. 5: eine schematische Seitenansicht eines Treppensteigers mit Rollstuhl und einer vierten Ausführungsform einer Sicherheitseinrichtung und
- Fig. 6: eine schematische Seitenansicht eines Treppensteigers mit Rollstuhl und einer fünften Ausführungsform einer Sicherheitseinrichtung.

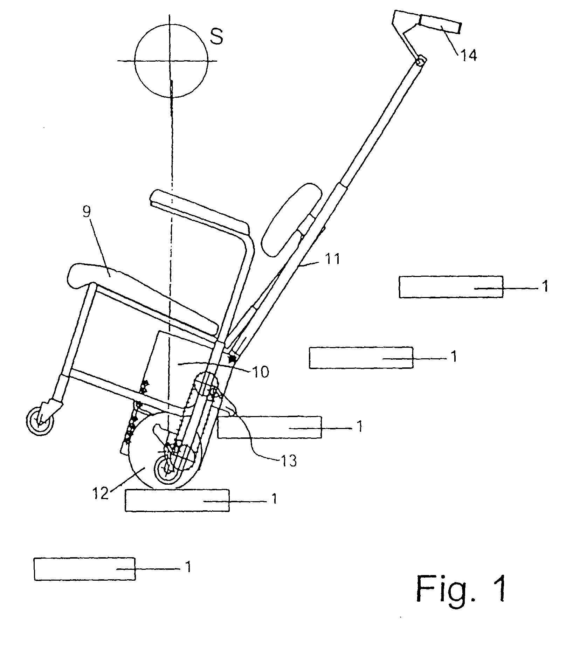

Fig. 1 zeigt in einer schematischen Seitenansicht eine auf einer Treppe 1 stehende Treppensteigvorrichtung 10 mit angebautem Rollstuhl 9. Die Treppensteigvorrichtung 10 steht mit ihren Laufrädern 12 auf einer Treppenstufe. Als Hubmechanik für den Transport des Rollstuhls 9 treppauf und treppab ist hier beispielsweise eine paternosterartige Einrichtung 13 eingezeichnet. Grundsätzlich sind jedoch alle Arten von vergleichbaren Hubeinrichtungen, wie sie in der Beschreibungseinleitung erläutert wurden, geeignet. Handgriffe 14 an einer Bedienungsstange 11 erlauben es der Bedienungsperson, Treppensteiger 10, Rollstuhl 9 und gehunfähige Person so weit nach hinten zu neigen, daß der Gesamtschwerpunkt S dieser Kombination sich genau über der Achse der Laufräder 12 befindet, die Kombination in dieser Position zu halten und treppauf und treppab zu führen.

Sobald die Hubvorrichtung 13 aktiv wird, verlieren die Laufräder 12 den Kontakt mit der Treppe 1. Dadurch befindet sich der Schwerpunkt S jetzt vor dem Auflager des Treppensteigers 10 auf der Treppe 1. Treppensteiger 10, Rollstuhl 9 und gehunfähige Person drohen nach vorne über die Treppe 1 hinunterzustürzen. Dies muß die Bedienungsperson durch entsprechend starkes Ziehen an den Handgriffen 14 verhindern. Die Praxis hat leider bewiesen, daß dies nicht immer möglich ist.

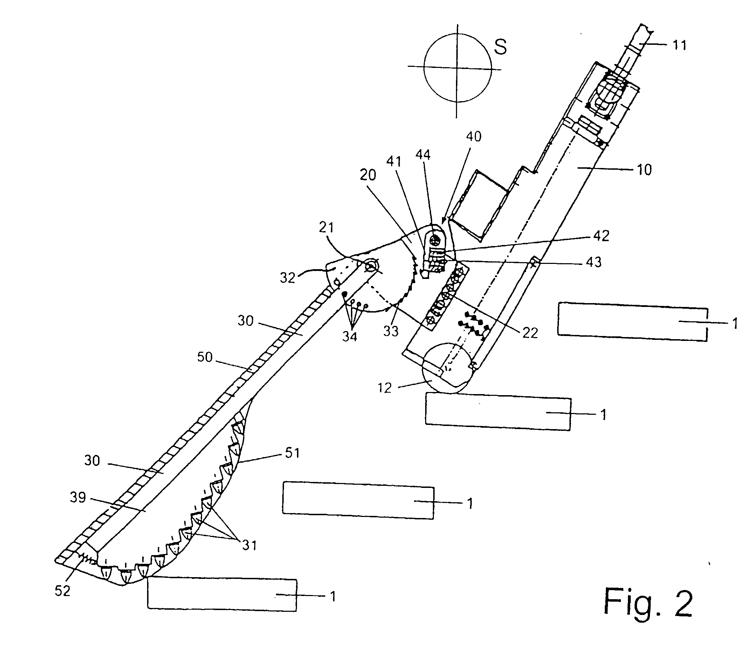

Fig. 2 zeigt in einer schematischen, teilweise aufgebrochenen Darstellung eine Sicherheitsvorrichtung, angebaut an die Treppensteigvorrichtung 10. Die Sicherheitsvorrichtung hat die Aufgabe zu verhindern, daß die Kombination aus Treppensteigvorrichtung 10, Rollstuhl und gehunfähiger Person die Treppe hinunterfallen kann, wenn sich der Schwerpunkt S zu weit nach vorne verlagert.

Die Sicherheitsvorrichtung umfaßt zunächst eine Montagevorrichtung 20, die am Treppensteiger 10 befestigt ist. Das Befestigungsteil 22 der Montagevorrichtung 20 kann an den jeweiligen Treppensteiger leicht angepaßt werden, so daß die Sicherheitsvorrichtung an allen Arten von Treppensteigern nachgerüstet werden kann.

An der Montagevorrichtung 20 ist eine waagerechte Drehachse 21 vorgesehen, auf der ein Stützarm 30 frei drehbar gelagert ist. Der Stützarm 30 erstreckt sich über wenige, z. B. ein oder zwei Treppenstufen 1. An seinem freien Ende ist er mit einer Anzahl von rutschfesten Stützfüßen 31 ausgerüstet, die an einem Schwert 39 so angeordnet sind, daß sie sich im Gefahrenfall annähernd senkrecht auf der Trittfläche einer Treppenstufe 1 abstützen.

Während der Stützarm 30 im Normalfall gegenüber der Montagevorrichtung 20 bzw. der Treppensteigvorrichtung 10 völlig frei beweglich sein muß, muß er im Gefahrenfall sofort blockiert werden. Hierzu dient eine Brems- und Sperrvorrichtung 40. Im vorliegenden Beispiel besteht diese aus einem Klinkenrad 32 und einer Klinke 41, 42. Das Klinkenrad 32 ist am Stützarm 30 befestigt, wobei die Winkelposition zwischen Klinkenrad 32 und Stützarm 30 bei Bedarf justiert werden kann. Hierzu sind Bohrungen 34 vorgesehen.

Die Klinke 41, 42 ist an der Montagevorrichtung 20 um eine waagerechte Achse 44 frei pendelnd aufgehängt. Solange die Treppensteigvorrichtung 10 korrekt nach hinten geneigt ist, sind Klinkenrad 32 und Klinke 41, 42 gegenseitig beabstandet. Sobald sich die Treppensteigvorrichtung 10 aufrichtet, verkürzt sich der Abstand zwischen Klinke 41 und Klinkenrad 32 gemäß einer SinusFunktion, bis schließlich die Klinke 41 in die Verzahnung 33 des Klinkenrads 32 einfällt. Dadurch wird der Stützarm 30 blockiert und die Treppensteigvorrichtung 10 kann sich nicht weiter aufrichten. Neigt die Bedienungsperson die Treppensteigvorrichtung 10 wieder korrekt nach hinten, löst sich die Klinke 41 aus dem Klinkenrad 32 und der Stützarm 30 ist frei beweglich.

Wie Fig. 2 erkennen läßt, besteht die Klinke aus einem ersten, leichten Teil 41, welches den Klinkenzahn besitzt, und einem zweiten, schweren Teil 42, welches für die stets senkrechte Position aufgrund der Schwerkraft verantwortlich ist. Beide Teile 41, 42 sind über eine leichte Feder 43 gekoppelt. Aufgrund dieser zweiteiligen Konstruktion kann der Klinkenzahn am leichten Klinkenteil 41 sehr schnell in die Klinkenradverzahnung 33 einfallen.

Über den Stützarm 30 und die Stützfüße 31 ist eine Gleitkufe 50 mit U-förmigem Querschnitt gestülpt. Eine Zugfeder 52 zieht den Stützarm 30 in die Gleitkufe 50. Die Stirnfläche 51 der Gleitkufe 50 ist so geformt, daß die Stützfüße 31 im Normalfall hinter der Stirnfläche 51 verschwinden. Dadurch gleitet lediglich die Stirnfläche 51 auf den Treppenstufenkanten. Ist die Stirnkante 51 mit einem gut gleitfähigen Material belegt, werden die Treppenkanten geschont.

Die Zugfeder 52 ist jedoch schwach genug, um sicherzustellen, daß sich die Stützfüße 31 im Gefahrenfall ohne Verzögerung auf der Trittfläche der nächsten Treppenstufe 1 - weitgehend senkrecht aufsitzend - abstützen können.

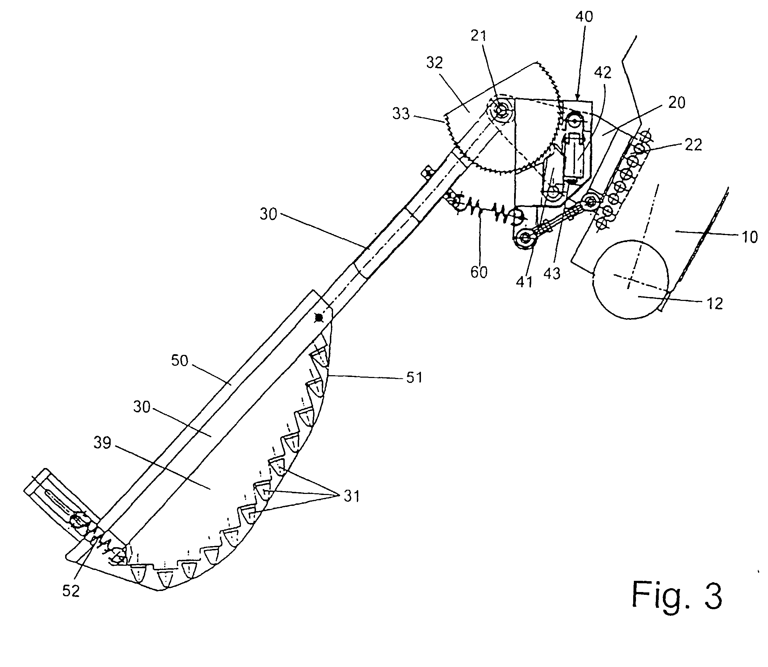

Fig. 3 zeigt eine zweite Ausführungsform einer Sicherheitsvorrichtung 40' an dem Treppensteiger 10. Die in die Verzahnung 33 des Klinkenrades 32 einfallende Klinke besteht zwar wieder aus zwei Teilen 41', 42', die durch eine schwache Feder 43 gekoppelt sind; im vorliegenden Fall ist jedoch nur die schwere Teilklinke 42' hängend montiert, während das leichte Klinkenteil 41' steht. Die Funktion der Klinke 41', 42' entspricht ansonsten der Funktion der Klinke 41, 42 in Fig. 1.

Zwischen Montagevorrichtung 20 und Stützarm 30 ist eine zusätzliche Stützfeder 60 vorgesehen. Diese ist so dimensioniert, daß sie kraftlos ist, wenn der Treppensteiger 10 die korrekt zur Treppe 1 geneigte Position hat. Verändert der Treppensteiger 10 seine Position nach vorne oder hinten, so zieht bzw. drückt die Stützfeder 60 den Treppensteiger 10 wieder in die korrekte Lage.

Die Kräfte werden über den Stützarm 30 und die Gleitkufe 50 auf die jeweilige Treppenstufe übertragen. Auf diese Weise wird die Bedienungsperson des Treppensteigers 10 entlastet.

Um die Rückweich-Funktion der Gleitkufe 50, 51 bei stärkerer, gefährlicher Neigung des Treppensteigers 10 treppabwärts nicht zu verlieren, müssen die beiden Federn 52, 60 kräftemäßig aufeinander abgestimmt sein.

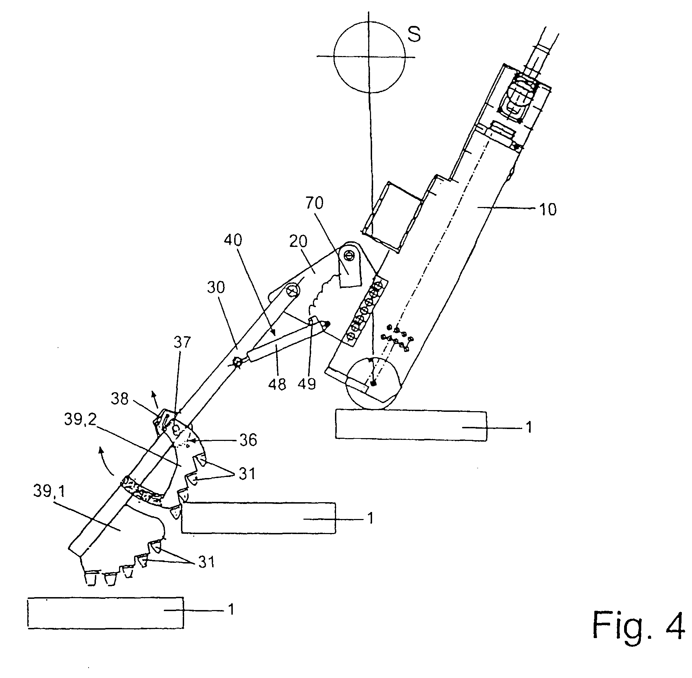

Fig. 4 zeigt eine dritte Ausführungsform einer Sicherheitsvorrichtung an dem Treppensteiger 10. Als Brems- und Sperrvorrichtung 40" ist zwischen Montagevorrichtung 20 und Stützarm 30 eine blockierbare Zylinder-Kolben-Einheit 48 mit internem Fluid-Umlauf und einem elektrisch ansteuerbaren Sperrventil 49 im Fluid-Umlauf vorgesehen. Die Lage des Treppensteigers 10 auf der Treppe 1 wird mit Hilfe eines elektromechanischen Krängungssensors 70 gemessen, der ein Sperrsignal an das Sperrventil 49 sendet, wenn der Treppensteiger 10 eine gefährliche Position einnimmt.

In Abwandlung zu den Ausführungsformen der Fig. 2 und 3 ist im vorliegenden Ausführungsbeispiel das Schwert, an dem sich die Stützfüße 31 befinden, zweiteilig ausgeführt. Der eine Schwertteil 39.1 ist am Stützarm 30 starr befestigt. Der zweite Schwertteil 39.2 dagegen ist gegenüber dem Stützarm 30 verschieblich und schwenkbar gelagert. Hierzu dient eine Kombination 37 aus einem Zapfen und einem Langloch in Verbindung mit einer Druckfeder 38. Dank einer solchen zweiteiligen Ausführung des Schwerts 39.1, 39.2 ist die Sicherheitsvorrichtung auf für extrem flache Treppen 1 geeignet.

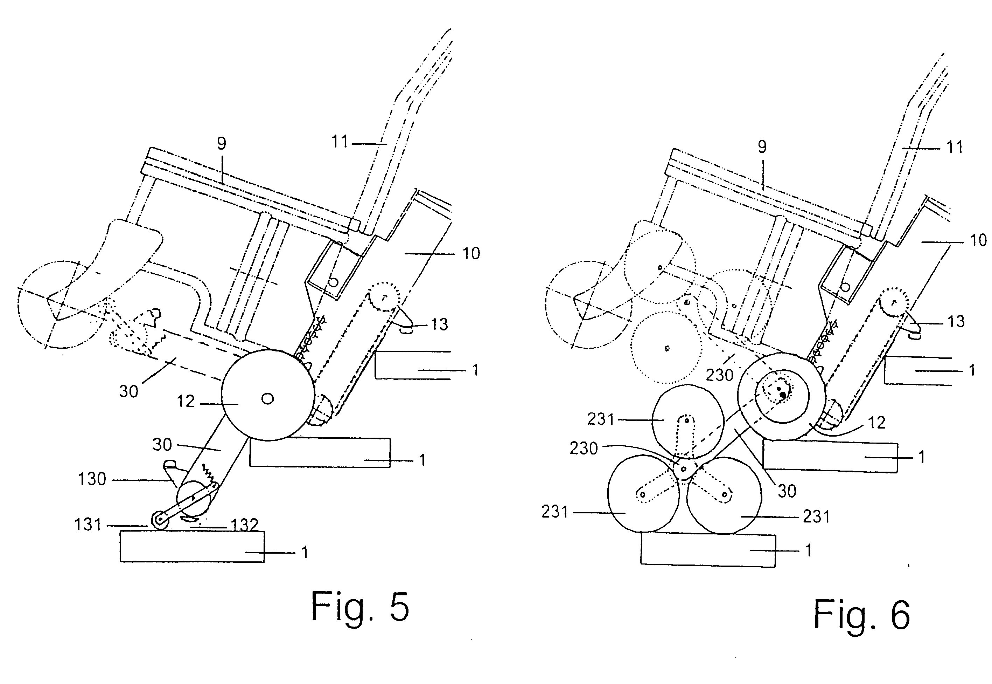

Fig. 5 zeigt eine aktive Sicherheitsvorrichtung. Hierzu ist der Stützarm 30 mit einer motorisch angetriebenen Hubvorrichtung 130 ausgerüstet, die dem Hubtrieb 13 des Treppensteigers 10 entspricht. Eine Tastrolle 131 und ein Tastfühler 132 dienen als Steuer- und Sicherheitsschalter für die Hubvorrichtung 130. Bei korrekter Abstimmung von Hubtrieb 13 am Treppensteiger 10 und Hubvorrichtung 130 am Stützarm 30 laufen die beiden Hubtriebe synchron und der Rollstuhl 9 mit der gehunfähigen Person wird praktisch ohne funktionsbedingte Kippbewegungen des Rollstuhls 9 treppauf und treppab transportiert. Dank der nach wie vor vorhandenen Brems- und Sperrvorrichtung wird jedoch auch in diesem Fall der Stützarm 30 sofort blockiert, wenn sich der Treppensteiger 10 gefährlich aufrichtet und über die Treppe 1 hinunterzufallen droht. Es versteht sich, daß in einem solchen Fall die Hubtriebe 13, 130 sofort gestoppt werden.

Fig. 6 zeigt eine Sicherheitsvorrichtung, die sowohl passiv als auch aktiv ausgeführt werden kann. Am freien Ende des Stützarms 30 ist ein dreiarmiges Drehkreuz 230 drehbar befestigt, welches drei Stützräder 231 aufweist. Die Stützräder 231 stützen sich auf der Trittfläche der Treppenstufen auf. Wird das Drehkreuz 230 motorisch angetrieben und die Drehzahl mit dem Hubantrieb 13 synchronisiert, wird der Rollstuhl 9 wieder problemlos und praktisch ohne Schwankungen treppauf und treppab transportiert.

Wie die Fig. 5 und 6 darüber hinaus zeigen, läßt sich der Stützarm 30 mit den daran angebrachten Vorrichtungen und Einrichtungen unter den Rollstuhl 9 schwenken, wenn der Rollstuhl 9 auf ebenen Flächen gefahren oder geschoben wird.

## Patentansprüche

1. Sicherheitsvorrichtung, zu verwenden mit Treppensteigvorrichtungen (10) für den Transport von Geräten und Gütern, insbesondere von Rollstühlen (9) mit gehunfähigen Personen, **gekennzeichnet durch** die Merkmale:
- am Treppensteiger (10) bzw. am Rollstuhl (9) ist eine Montagevorrichtung (20) vorgesehen,
-- ausgerüstet mit einer Drehachse (21),
- an der Drehachse (21) ist ein Stützarm (30) gelagert,
- eine Brems- und Sperrvorrichtung (40) ist einerseits am Stützarm (30), andererseits an der Montagevorrichtung (20) befestigt,
- ein Sensor (70) steuert die Brems- und Sperrvorrichtung (40) so, daß sie
-- den Stützarm (30) blockiert, sobald der Treppensteiger (10) über die Treppe (1) zu kippen droht, und
-- den Stützarm (30) freigibt, wenn der Treppensteiger (10) korrekt zur Treppe (1) geneigt ist.

2. Sicherheitsarm nach Anspruch 1, **gekennzeichnet durch** die Merkmale:
- in unteren Endbereich des Stützarms (30) angebrachte Vorrichtungen (31) bewirken einen weitgehend senkrecht auf die Trittfläche der nächst- oder zweitnächst unteren Stufe auftreffenden Abstützvorgang.

3. Sicherheitsvorrichtung nach Anspruch 1 oder 2, **gekennzeichnet durch** das Merkmal:
- am freien Ende des Stützarms (30) ist eine Anzahl von Stützfüßen (31) angebracht oder angeformt, von denen sich jeweils einer im Gefahrenfall auf der Trittfläche einer Treppenstufe (1) abstützt.

4. Sicherheitsvorrichtung nach Anspruch 2 oder 3, **gekennzeichnet durch** die Merkmale:
- die Stützfüße (31) sind in zwei Einheiten (39.1, 39.2) aufgeteilt,
- die eine, vorzugsweise die obere Einheit (39.2) ist am Stützarm (30) gegen eine Feder (38) verschieb- und schwenkbar gelagert,
- eine Sperrvorrichtung (36) blockiert die bewegliche Einheit (39.2), sobald die Aufstützkraft auf der Treppe (1) die Kraft der Feder (38) überwunden hat.

5. Sicherheitsvorrichtung nach Anspruch 4, **gekennzeichnet durch** die Merkmale:
- die Sperrvorrichtung (36, 37) besteht aus
-- einem Stift am Stützarm (30),
-- einem Langloch an der beweglichen Einheit (39.2),
-- einer Verzahnung am Stützarm (30)
-- und einem Zahn an der beweglichen Einheit (39.2).

6. Sicherheitsvorrichtung nach einem der Ansprüche 1 bis 5, **gekennzeichnet durch** die Merkmale:
- parallel zum Stützarm (30) ist eine Gleitkufe (50) montiert,
- eine Zugfeder (52) zieht den Stützarm (30) so in die Gleitkufe (50), daß im Normalfall nur die Stirnkante (51) der Gleitkufe (50) auf den Kanten der Treppenstufen (1) aufliegt.

7. Sicherheitsvorrichtung nach Anspruch 6, **gekennzeichnet durch** das Merkmal:
- die Gleitkufe (50) besitzt einen U-förmigen Querschnitt.

8. Sicherheitsvorrichtung nach Anspruch 6 oder 7, **gekennzeichnet durch** das Merkmal:
- die Stirnkante (51) der Gleitkufe (50) ist mit einem rutschfähigen Material belegt.

9. Sicherheitsvorrichtung nach einem der Ansprüche 6 bis 8, **gekennzeichnet durch** das Merkmal:
- vor der Stirnkante (51) der Gleitkufe (50) ist ein endlos umlaufendes Band montiert.

10. Sicherheitsvorrichtung nach einem der Ansprüche 1 bis 9, **gekennzeichnet durch** das Merkmal:
- der Sensor (70) ist ein Pendel (41, 42), montiert am Treppensteiger (10) oder an der Montagevorrichtung (20).

11. Sicherheitsvorrichtung nach einem der Ansprüche 1 bis 9, **gekennzeichnet durch** die Merkmale:
- die Brems- und Sperrvorrichtung (40) besteht aus
-- einem Klinkenrad (32) und
-- einer Klinke (41, 42).

12. Sicherheitsvorrichtung nach Anspruch 11, **gekennzeichnet durch** die Merkmale:
- das Zentrum des Klinkenrades (32) liegt im Zentrum der Drehachse (21),
- die Klinke (41, 42) ist als Pendel ausgebildet und an der Montagevorrichtung (20) um eine Achse (44) pendelnd montiert.

13. Sicherheitsvorrichtung nach Anspruch 12, **gekennzeichnet durch** die Merkmale:
- die Klinke besteht aus einem massearmen Teil (41) und einem massereichen Teil (42),
- eine Feder (43) zieht beide Teile (41, 42) zusammen.

14. Sicherheitsvorrichtung nach Anspruch 11, **gekennzeichnet durch** die Merkmale:
- das Zentrum des Klinkenrades (32) ist gegenüber der Drehachse (21) verschoben,
- die Klinke (41, 42) ist an der Montagevorrichtung (20) um eine Achse (44) schwenkbar gelagert,
- eine Feder zwischen Klinke (41, 42) und Montagevorrichtung (20) definiert die Ruheposition der Klinke.

15. Sicherheitsvorrichtung nach einem der Ansprüche 11 bis 14, **gekennzeichnet durch** das Merkmal:
- die Winkelposition des Klinkenrades (32) zum Stützarm (30) ist einstellbar.

16. Sicherheitsvorrichtung nach einem der Ansprüche 1 bis 10, **gekennzeichnet durch** das Merkmal:
- die Brems- und Sperrvorrichtung (40) ist ein blockierbares Zugglied endlicher Länge zwischen Stützarm (30) und Montagevorrichtung (20) bzw. Treppensteiger (10).

17. Sicherheitsvorrichtung nach einem der Ansprüche 1 bis 11, **gekennzeichnet durch** das Merkmal:
- als Brems- und Sperrvorrichtung (40) ist eine Backenbremse vorgesehen.

18. Sicherheitsvorrichtung nach einem der Ansprüche 1 bis 10, **gekennzeichnet durch** das Merkmal:
- als Brems- und Sperrvorrichtung (40) ist eine Federbandbremse vorgesehen.

19. Sicherheitsvorrichtung nach einem der Ansprüche 1 bis 10, **gekennzeichnet durch** das Merkmal:
- als Brems- und Sperrvorrichtung (40) ist eine Elektrokupplung vorgesehen.

20. Sicherheitsvorrichtung nach einem der Ansprüche 1 bis 10, **gekennzeichnet durch** das Merkmal:
- als Brems- und Sperrvorrichtung (40) ist eine blockierbare Zylinder-Kolben-Einheit (48) vorgesehen.

21. Sicherheitsvorrichtung nach Anspruch 20, **gekennzeichnet durch** die Merkmale:
- die Zylinder-Kolben-Einheit (48) besitzt
-- einen internen Fluid-Umlauf und
-- ein vom Sensor (70) angesteuertes Sperrventil (49) im Fluid-Umlauf.

22. Sicherheitsvorrichtung nach einem der Ansprüche 1 bis 21, **gekennzeichnet durch** die Merkmale:
- parallel zur Brems- und Sperrvorrichtung ist eine Stützfeder (60) vorgesehen,
- die Stützfeder (60) ist kraftlos, wenn die Treppensteigvorrichtung (10) korrekt zur Treppe (1) hin geneigt ist.

23. Sicherheitsvorrichtung nach Anspruch 22, **gekennzeichnet durch** das Merkmal:
- die Stützfeder (60) ist schwächer als die Zugfeder (52).

24. Sicherheitsvorrichtung nach einem der Ansprüche 1 bis 21, **gekennzeichnet durch** die Merkmale:
- parallel zur Brems- und Sperrvorrichtung (40) ist ein Antrieb vorgesehen,
- der Antrieb ist gesteuert in Abhängigkeit von der Soll-Ist-Differenz,
-- der Lage des Stützarms (30) relativ zum Treppensteiger (10) und/oder
-- der Andruckkraft des Stützarms (30) an der Treppe (1).

25. Sicherheitsvorrichtung nach Anspruch 24, **gekennzeichnet durch** das Merkmal:
- Antrieb und Brems- und Sperrvorrichtung (40) sind integriert.

26. Sicherheitsvorrichtung nach Anspruch 1 oder 2, **gekennzeichnet durch** das Merkmal:
- am Stützarm (30) ist ein endloses Raupenband angebracht.

27. Sicherheitsvorrichtung nach Anspruch 1 oder 2, **gekennzeichnet durch** das Merkmal:
- am freien Ende des Stützarms (30) ist ein Drehkreuz (230) mit wenigstens zwei Stützrädern (231) angebracht.

28. Sicherheitsvorrichtung nach Anspruch 27, **gekennzeichnet durch** das Merkmal:
- das Drehkreuz (230) ist motorisch angetrieben.

29. Sicherheitsvorrichtung nach Anspruch 26, **gekennzeichnet durch** das Merkmal:
- das Raupenband ist motorisch angetrieben.

30. Sicherheitsvorrichtung nach Anspruch 1 oder 2, **gekennzeichnet durch** das Merkmal:
- am Stützarm (30) ist ein paternosterartiger Hubtrieb (130) befestigt.

31. Sicherheitsvorrichtung nach Anspruch 28, 29 oder 30, **gekennzeichnet durch** das Merkmal:
- der motorische Antrieb ist mit dem Hubtrieb (13) des Treppensteigers (10) synchronisiert.

## Claims

1. Safety arrangement for use with stair-climbing arrangements (10) for transporting goods and equipment, in particular wheelchairs (9) with individuals who are unable to walk, **characterized by** the following features:
- a mounting arrangement (20) is provided on the stair climber (10) and/or on the wheelchair (9),
-- said mounting arrangement being equipped with a swivel pin (21),
- a supporting arm (30) is mounted on the shivel pin (21),
- a braking and blocking arrangement (40) is fastened, on the one hand, on the supporting arm (30) and, on the other hand, on the mounting arrangement (20),
- a sensor (70) controls the braking and blocking arrangement (40) such that
-- it blocks the supporting arm (30) as soon as the stair climber (10) threatens to tilt over the stair (1), and
-- releases the supporting arm (30) when the stair climber (10) is inclined correctly in relation to the stair (1).

2. Safety arm according to Claim 1, **characterized by** the following features:
- arrangements (31) fitted in the bottom end region of the supporting arm (30) provide support which is largely in vertical contact with the tread surface of the next stair down or second stair down.

3. Safety arrangement according to Claim 1 and 2, **characterized by** the following feature:
- fitted or integrally formed at the free end of the supporting arm (30) are a number of supporting feet (31), of which, in the event of danger, in each case one is supported on the tread surface of a stair (1).

4. Safety arrangement according to Claims 2 and 3, **characterized by** the following features:
- the supporting feet (31) are divided up into two units (39.1, 39.2),
- one unit, preferably the top unit (39.2), is mounted on the supporting arm (30) such that it can be displaced and pivoted counter to the spring (38),
- a blocking arrangement (36) blocks the movable unit (39.2) as soon as the supporting force on the stair (1) has overcome the force of the spring (38).

5. Safety arrangement according to Claim 4, **characterized by** the following features:
- the blocking arrangement (36, 37) comprises,
-- a pin on the supporting arm (30),
-- a slot on the movable unit (39.2),
-- a toothing formation on the supporting arm (30),
-- and a tooth on the movable unit (39.2).

6. Safety arrangement according to one of Claims 1 to 5, **characterized by** the following features:
- a runner (50) is mounted parallel to the supporting arm (30),
- a tension spring (52) draws the supporting arm (30) into the runner (50) such that normally only the end edge (51) of the runner (50) rests on the edges of the stair (1).

7. Safety arrangement according to Claim 6, **characterized by** the following feature:
- the runner (50) has a U-shaped cross section.

8. Safety arrangement according to Claim 6 or 7, **characterized by** the following feature:
- the end edge (51) of the runner (50) is coated with a slidable material.

9. Safety arrangement according to one of Claims 6 to 8, **characterized by** the following feature:
- an endlessly circulating belt is mounted in front of the end edge (51) of the runner (50).

10. Safety arrangement according to one of Claims 1 to 9, **characterized by** the following feature:
- the sensor (70) is a pendulum (41, 42) mounted on the stair climber (10) or on the mounting arrangement (20).

11. Safety arrangement according to one of Claims 1 to 9, **characterized by** the following features:
- the braking and blocking arrangement (40) comprises
-- a ratchet wheel (32) and
-- a ratchet (41, 42).

12. Safety arrangement according to Claim 11, **characterized by** the following features:
- the centre of the ratchet wheel (32) is located in the centre of the swivel pin (21),
- the ratchet (31, 32) is designed as a pendulum and is mounted on the mounting arrangement (20) such that it swings about an axis (44).

13. Safety arrangement according to Claim 12, **characterized by** the following features:
- the ratchet comprises a low-mass part (41) and a high-mass part (42),
- a spring (43) draws the two parts (41, 42) together.

14. Safety arrangement according to Claim 11, **characterized by** the following features:
- the centre of the ratchet (32) is displaced in relation to the swivel pin (21),
- the ratchet (41, 42) is mounted on the mounting arrangement (20) such that it can be pivoted about an axis (44),
- a spring between the ratchet (41, 42) and mounting arrangement (20) defines the rest position of the ratchet.

15. Safety arrangement according to one of Claims 11 to 14, **characterized by** the following feature:
- it is possible to adjust the angle position of the ratchet wheel (32) in relation to the supporting arm (30).

16. Safety arrangement according to one of Claims 1 to 10, **characterized by** the following feature:
- the braking and blocking arrangement (40) is a blockable tension member of finite length between the supporting arm (30) and mounting arrangement (20) and/or stair climber (10).

17. Safety arrangement according to one of Claims 1 to 11, **characterized by** the following feature:
- a shoe brake is provided as the braking and blocking arrangement (40).

18. Safety arrangement according to one of Claims 1 to 10, **characterized by** the following feature:
- a spring-band brake is provided as the braking and blocking arrangement (40).

19. Safety arrangement according to one of Claims 1 to 10, **characterized by** the following feature:
- an electric clutch is provided as the braking and blocking arrangement (40).

20. Safety arrangement according to one of Claims 1 to 10, **characterized by** the following feature:
- a blockable cylinder/piston unit (48) is provided as the braking and blocking arrangement (40).

21. Safety arrangement according to Claim 20, **characterized by** the following features:
- the cylinder/piston unit (48) has
-- an internal fluid circuit, and
-- a shut-off valve (49), activated by the sensor (70), in the fluid circuit.

22. Safety arrangement according to one of Claims 1 to 21, **characterized by** the following features:
- a supporting spring (60) is provided parallel to the braking and blocking arrangement,
- the supporting spring (60) is devoid of force when the stair-climbing arrangement (10) is inclined correctly in the direction of the stair (1).

23. Safety arrangement according to Claim 22, **characterized by** the following feature:
- the supporting spring (60) is weaker than the tension spring (52).

24. Safety arrangement according to one of Claims 1 to 21, **characterized by** the following features:
- a drive is provided parallel to the braking and blocking arrangement (40),
- the drive is controlled in dependence on the desired/actual difference,
-- on the position of the supporting arm (30) relative to the stair climber (10) and/or
-- on the contact force of the supporting arm (30) on the stair (1).

25. Safety arrangement according to Claim 24, **characterized by** the following feature:
- the drive and braking and blocking arrangement (40) are integrated.

26. Safety arrangement according to Claim 1 or 2, **characterized by** the following feature:
- an endless tracked belt is fitted on the supporting arm (30).

27. Safety arrangement according to Claim 1 or 2, **characterized by** the following feature:
- a spider (230) with at least two supporting wheels (231) is fitted at the free end of the supporting arm (30).

28. Safety arrangement according to Claim 27, **characterized by** the following feature:
- the spider (230) is motor-driven.

29. Safety arrangement according to Claim 26, **characterized by** the following feature:
- the tracked belt is motor-driven.

30. Safety arrangement according to Claim 1 or 2, **characterized by** the following feature:
- a paternoster-like lifting drive (130) is fastened on the supporting arm (30).

31. Safety arrangement according to Claim 28, 29 or 30, **characterized by** the following feature:
- the motor drive is synchronized with the lifting drive (130) of the stair climber (10).

## Revendications

1. Dispositif de sécurité, à utiliser avec un système monte-escalier (10) pour le transport d'appareils et de marchandises, en particulier de fauteuils roulants (9) avec des personnes handicapées, **caractérisé par** les particularités :
- un dispositif de montage (20) est prévu sur le monte-escalier (10) ou respectivement sur le fauteuil roulant (9),
- équipé d'un axe de rotation (21),
- un bras d'appui (30) est monté en rotation sur l'axe de rotation (21),
- un dispositif de freinage et blocage (40) est fixé d'une part au bras d'appui (30), d'autre part au dispositif de montage (20)
- un détecteur (70) commande le dispositif de freinage et blocage (40) de façon que celui-ci :
. bloque le bras d'appui (30) dès que le monte-escalier (10) menace de basculer sur l'escalier (1), et
. libère le bras d'appui (30) lorsque le monte-escalier (10) est correctement incliné par rapport à l'escalier (1).

2. Bras de sécurité selon de revendication 1, **caractérisé par** les particularités :
- des dispositifs (31) montés dans la zone d'extrémité du bras inférieur (30) exercent un processus d'appui intervenant en grande partie verticalement sur la surface de marche de la première ou la deuxième marche qui suit vers le bas.

3. Dispositif de sécurité selon la revendication 1 ou 2, **caractérisé par** la particularité :
- un certain nombre de pieds d'appuis (31) sont montés ou formés à l'extrémité libre du bras d'appui (30), l'un de ces pieds s'appuyant sur la surface de marche d'une marche d'escalier (1) en cas de danger.

4. Dispositif de sécurité selon la revendication 2 ou 3, **caractérisé par** les particularités :
- les pieds d'appui (31) sont subdivisés en deux unités (39.1, 39.2),
- l'une des unités, de préférence l'unité supérieure (39.2), est montée déplaçable et pivotante à l'encontre d'un ressort (38) sur le bras d'appui (30),
- un dispositif de blocage (36) bloque l'unité mobile (39.2) dès que la force d'appui sur l'escalier (1) a surmonté la force du ressort (38).

5. Dispositif de sécurité selon la revendication 4, **caractérisé par** les particularités :
- le dispositif de blocage (36, 37) est constitué de :
. une goupille sur le bras d'appui (30),
. un trou oblong sur l'unité mobile (39.2),
. une denture sur le bras d'appui (30),
. et une dent sur l'unité mobile (39.2)

6. Dispositif de sécurité selon l'une des revendications 1 à 5, **caractérisé par** les particularités :
- un patin (50) est monté parallèlement au bras d'appui (30)
- un ressort de traction (52) tire le bras d'appui (30) dans le patin (50) de telle sorte que dans le cas normal le bord frontal (51) du patin (50) est seul à s'appuyer sur les bords des marches d'escalier (1).

7. Dispositif de sécurité selon la revendication 6, **caractérisé par** la particularité :
- le patin (50) possède une section transversale en U.

8. Dispositif de sécurité selon la revendication 6 ou 7, **caractérisé par** la particularité :
- le bord frontal (51) du patin (50) est recouvert d'un matériau capable de glissement.

9. Dispositif de sécurité selon l'une des revendications 6 à 8, **caractérisé par** la particularité :
- une courroie circulante sans fin est montée devant le bord frontal (51) du patin (50).

10. Dispositif de sécurité selon l'une des revendications 1 à 9, **caractérisé par** la particularité :
- le détecteur (70) est un pendule (41, 42), monté sur le monte-escalier (10) ou sur le dispositif de montage (20).

11. Dispositif de sécurité selon l'une des revendications 1 à 9, **caractérisé par** les particularités :
- le dispositif de freinage et de blocage (40) est constitué de :
. une roue à cliquet (32) et
. un cliquet (41, 42).

12. Dispositif de sécurité selon la revendication 11, **caractérisé par** les particularités :
- le centre de la roue à cliquet (32) se trouve au centre de l'axe de rotation (21),
- le cliquet (41, 42) est réalisé sous la forme d'un pendule monté oscillant sur le dispositif de montage (20) autour d'un axe (24).

13. Dispositif de sécurité selon la revendication 12, **caractérisé par** les particularités :
- le cliquet est constitué d'une partie à faible masse (41) et une partie massive (42),
- un ressort (43) tire les deux parties (41, 42) l'une vers l'autre.

14. Dispositif de sécurité selon la revendication 11, **caractérisé par** les particularités :
- le centre de la roue à cliquet (32) est décalé par rapport à l'axe de rotation (21),
- le cliquet (41, 42) est monté pivotant autour d'un axe (44) sur le dispositif de montage (20),
- un ressort entre cliquet (41, 42) et dispositif de montage (20) définit la position de repos du cliquet.

15. Dispositif de sécurité selon l'une des revendications 1 à 14, **caractérisé par** la particularité :
- la position angulaire de la roue à cliquet (32) est réglable par rapport au bras d'appui (30).

16. Dispositif de sécurité selon l'une des revendications 1 à 10, **caractérisé par** la particularité :
- le dispositif de freinage et blocage (40) est un organe de traction blocable, de longueur finie, entre le bras d'appui (30) et le dispositif de montage (20) ou le monte-escalier (10).

17. Dispositif de sécurité selon l'une des revendications 1 à 11, **caractérisé par** la particularité :
- un frein à machoire est prévu en tant que dispositif de freinage et blocage (40).

18. Dispositif de sécurité selon l'une des revendications 1 à 10, **caractérisé par** la particularité :
- un frein à bande élastique est prévu en tant que dispositif de freinage et blocage (40).

19. Dispositif de sécurité selon l'une des revendications 1 à 10, **caractérisé par** la particularité :
- un accouplement électrique est prévu en tant que dispositif de freinage et blocage (40).

20. Dispositif de sécurité selon l'une des revendications 1 à 10, **caractérisé par** la particularité :
- une unité à cylindre et piston blocable est prévue en tant que dispositif de freinage et blocage (40).

21. Dispositif de sécurité selon la revendication 20, **caractérisé par** les particularités :
- l'unité à cylindre et piston (48) possède :
- un circuit fluidique interne et,
- dans le circuit fluidique, une vanne d'arrêt (49) commandée par le détecteur (70).

22. Dispositif de sécurité selon l'une des revendications 1 à 21, **caractérisé par** les particularités :
- un ressort d'appui (60) est prévu en parallèle avec le dispositif de freinage et blocage,
- le ressort d'appui (60) est sans force lorsque le système monte-escalier (10) est correctement incliné par rapport à l'escalier (1).

23. Dispositif de sécurité selon la revendication 2, **caractérisé par** la particularité :
- le ressort d'appui (60) est plus faible que le ressort de traction ((52).

24. Dispositif de sécurité selon l'une des revendications 1 à 21, **caractérisé par** les particularités :
- un entraînement est prévu en parallèle avec le dispositif de freinage et blocage (40),
- l'entraînement est piloté en fonction de la différence consigne-mesure :
. de la position du bras d'appui (30) par rapport au monte-escalier (10) et/ou
. de la force d'appui du bras d'appui (30) sur l'escalier (1).

25. Dispositif de sécurité selon la revendication 24 **caractérisé par** la particularité :
- l'entraînement et le dispositif de freinage et blocage (40) sont intégrés.

26. Dispositif de sécurité selon la revendication 1 ou 2, **caractérisé par** la particularité :
- une chenille sans fin est montée sur le bras d'appui (30).

27. Dispositif de sécurité selon la revendication 1 ou 2, **caractérisé par** la particularité ;
- un tourniquet (230) avec au moins deux roues d'appui (231) est monté à l'extrémité libre du bras d'appui (30).

28. Dispositif de sécurité selon la revendication 27, **caractérisé par** la particularité :
- le tourniquet (230) est entraîné par moteur.

29. Dispositif de sécurité selon la revendication 26, **caractérisé par** la particularité :
- la chenille est entraînée par moteur.

30. Dispositif de sécurité selon la revendication 1 ou 2, **caractérisé par** la particularité :
- un dispositif élévateur du type paternoster (130) est fixé au bras d'appui (30).

31. Dispositif de sécurité selon la revendication 28, 29 ou 30, **caractérisé par** la particularité :
- l'entraînement par moteur est synchonisé avec l'entraînement élévateur (13) du monte-escalier (10).
